# EUROPÄISCHE PATENTSCHRIFT

(11) **EP 2 893 314 B1**
(45) Veröffentlichungstag und Bekanntmachung des Hinweises auf die Patenterteilung: **30.11.2016**
(21) Anmeldenummer: 13762985.3
(22) Anmeldetag: 30.08.2013
(51) Int. Cl.: G01M 13/02, G01L 5/10, F16H 7/08, F16H 7/14, B62D 5/04

(54) **VERFAHREN ZUR EINSTELLUNG DER RIEMENSPANNUNG IN EINEM LENKGETRIEBE**
METHOD FOR ADJUSTING THE BELT TENSION IN STEERING GEAR
PROCÉDÉ DE RÉGLAGE DE LA TENSION DE COURROIE DANS UN MÉCANISME DE DIRECTION

(30) Priorität: 03.09.2012 DE 102012017317
(43) Veröffentlichungstag der Anmeldung: 15.07.2015
(73) Patentinhaber: ThyssenKrupp Presta AG, 9492 Eschen (LI); ThyssenKrupp AG, 45143 Essen (DE)
(72) Erfinder: SCHOLTEN, Michael, A-6723 Blons (AT); ILLES, Andras, CH-9470 Buchs (CH)
(74) Vertreter: ThyssenKrupp Intellectual Property GmbH
(86) Internationale Anmeldenummer: PCT/EP2013/002612
(87) Internationale Veröffentlichungsnummer: WO 2014/032809

(56) Entgegenhaltungen:
- WO-A1-2012/033447
- DE-A1- 10 304 189
- FR-A1- 2 956 983

## Beschreibung

Die vorliegende Erfindung betrifft ein Verfahren mit den Merkmalen des Oberbegriffs des Anspruchs 1 und des Anspruchs 8.

In elektromechanischen Lenkungen für Kraftfahrzeuge werden Riemengetriebe mit Zahnriemen eingesetzt, um eine Untersetzung zwischen einem Elektromotor, der die Lenkkraft oder Lenkhilfskraft aufbringt und einem rotierendem Getriebeelement wie zum Beispiel einer Kugelmutter zu erzielen. Durch das Riemengetriebe wird auch eine Entkopplung zwischen dem Motor und dem eigentlichen Lenkgetriebe bewirkt, die zu einer Geräuschreduktion führen kann.

Die Spannung des Zahnriemens in solchen Betrieben ist dabei von großer Bedeutung. Eine zu hohe Riemenspannung beeinträchtigt die Lebensdauer der Lager von Motorwelle und angetriebenem Getriebeelement. Hierdurch können auch vermehrt Geräusche entstehen. Eine zu niedrige Riemenspannung erhöht die Gefahr, dass der Zahnriemen in dem Ritzel oder der Riemenscheibe übersetzt und dadurch beschädigt wird. Weiter kommt es zu "totem Gang" bei einem Wechsel der Drehrichtung des Getriebes, dass bei einer Kraftfahrzeuglenkung in beide Drehrichtungen möglichst gleich arbeiten soll. Schließlich treten bei zu geringer Spannung auch Geräusche auf, die zum Beispiel durch die Neigung des unbelasteten Trums des Riemens zum Flattern entstehen. Wegen der hohen Risiken ist eine zu niedrige Riemenspannung in einer elektromechanischen Lenkung in jedem Fall zu vermeiden.

Bei einer optimalen Riemenspannung sind sowohl die Lebensdauer des Riemens und der damit im Eingriff stehenden Lager optimiert als auch die Geräuschentwicklung und das Lastwechselverhalten.

Beispiele für Einrichtungen zur Riemenspannung in elektrischen Kraftfahrzeugservolenkungen sind in der Offenlegungsschrift DE 103 04 189 A1 enthalten.

Verfahren und Vorrichtungen für die Messung und gegebenenfalls Einstellung der Riemenspannung sind ebenfalls bekannt.

Die Offenlegungsschrift DE 196 16 574 A1 beschreibt beispielsweise eine Vorrichtung und ein Verfahren zur Messung der Spannung eines Riemens, bei der der Riemen zu Schwingungen angeregt wird, um die Resonanzschwingungsfrequenz des Riemens zu ermitteln. Aus der Resonanzschwingungsfrequenz des Riemens wird dann auf die Riemenspannung geschlossen. In der Praxis zeigt sich, dass ein Zahnriemen aufgrund seiner Breite nicht das Schwingungsverhalten einer Saite zeigt. Während eine schwingende Saite eine ausgeprägte Resonanzfrequenz aufweist, ist bei einem Zahnriemen eine solche einzelne Resonanzfrequenz nicht zu bestimmen. Vielmehr sind in dem Zahnriemen in Laufrichtung des Riemens viele Materialstränge in Form von Bündeln von zugfesten Fasern parallel zueinander angeordnet, die die Zugfestigkeit und Formbeständigkeit des Zahnriemens garantieren. Diese Elemente weisen jeweils für sich ein isoliertes Schwingverhalten auf. Da diese Elemente über andere Bestandteile des Riemens miteinander gekoppelt sind, wird auch noch ein Spektrum von gekoppelten Schwingungen erzeugt, das die Auswertung sehr komplex macht. Dementsprechend ist die Reproduzierbarkeit der Messung bei Zahnriemen unbefriedigend.

Das US-Patent US 7,210,361 B1 zeigt ein Messverfahren zur Messung der Spannung eines Zahnriemens mit einem Messelement, das eine Messgabel mit zwei in einem Abstand voneinander angeordneten Messzapfen aufweist und das mit dem Riemen in Anlage bringbar und zur mechanischen Einwirkung auf den Riemen antreibbar ist. Hier sind die beiden Messzapfen in einem Abstand auf derselben Seite des Riemens angeordnet. Ein Messtaster drückt den Zahnriemen zwischen den Messzapfen ein und die Durchbiegung wird als Maß für die Riemenspannung ausgewertet.

Es ist in einer Serienfertigung nicht nur wichtig, die Riemenspannung bei der Montage jeder einzelnen Lenkung möglichst optimal einzustellen. Dabei soll das Einstellverfahren genau, aber auch kostengünstig durchführbar sein.

Die gattungsbildende Offenlegungsschrift DE 10 2007 019 258 A1 beschreibt ein Verfahren für den Zusammenbau einer elektrischen Hilfskraftlenkung, bei dem die Zahnriemenspannung entweder, wie bei dem oben genannten Stand der Technik, über einen Messtaster und Analyse der Eigenfrequenz der Schwingungen des Zahnriemens erfasst wird, oder über einen Messtaster eine Kraft auf das freie Trum des Riementriebs vertikal zur Riemenoberfläche ausgeübt wird. Der Messtaster ist dabei ein Dorn oder Stift, der punktuell auf den Zahnriemen gedrückt wird. Aus der Kraft oder dem Weg oder aus der Auswertung des Kraft/Weg-Diagramms wird auf die Riemenspannung geschlossen. Die Offenlegungsschrift DE 10 2008 002 304 A1 derselben Anmelderin zeigt eine entsprechende Messvorrichtung mit einem Stempel, der punktuell auf das freie Zahnriementrum wirkt. Auch hier wird die Kraft oder der Weg als Maß für die Riemenspannung ausgewertet.

Weitere Einrichtungen zur Überprüfung der Riemenspannung sind aus der DE 691 07 713 T2, der FR 26 17 282 A1, der DE 33 16 788 C2, der WO 2012/033447 und der FR2956983 bekannt.

Es zeigt sich in der Praxis, dass die Reproduzierbarkeit der Einstellung der Riemenspannung mit der gattungsgemäßen zu verbessern ist. Der Messtaster in Form eines Stempels oder eines Dorns erfasst den Zahnriemen nur punktuell. Die in den Zahnriemen im Umlaufrichtung eingearbeiteten Zugstränge können aber, wie oben bereits dargestellt wurde, ungleichförmig sein, so dass die Messung davon abhängt, ob der Messtaster im Bereich eines kürzeren oder eines längeren Faserstranges in Umlaufrichtung auf den Riemen aufgebracht wird.

Im Rahmen von Versuchen zu anderen Messverfahren hat die Anmelderin Versuche mit Messtastern oder Stempeln durchgeführt, die quer zu der Laufrichtung des Riemens auf ein freies Trum des Zahnriemens gedrängt wurden, wobei der Stempel oder Messtaster so breit gestaltet wurde, dass er im wesentlichen der Breite des Zahnriemens entspricht. Dabei ergab sich eine Anlagefläche quer zur Laufrichtung, die etwa parallel zu den einzelnen Zähnen des Zahnriemens verlief. Auch hierbei zeigt sich, dass das Verfahren selbst mit einem Messtaster, der die gesamte Zahnriemenbreite erfasst, einen Messfehler im Bereich von 30 % aufweist.

Es ist deshalb Aufgabe der vorliegenden Erfindung, ein Verfahren für die Einstellung der Riemenspannung in einem Riemengetriebe, insbesondere in einem elektromechanischen Lenkgetriebe mit Zahnriemen, mit besserer Reproduzierbarkeit zu schaffen.

Diese Aufgabe wird von einem Verfahren mit den Merkmalen des Anspruchs 1 und von einem Verfahren mit den Merkmalen des Anspruchs 8 gelöst.

Bei einem Verfahren zur Einstellung einer Riemenspannung in einem Riementrieb eines elektromechanischen Lenkgetriebes mit zwei achsparallelen, um jeweilige Drehachsen drehbaren Riemenrädern und einem die Riemenräder umschlingenden Riemen, wobei eine erste Drehachse eine Antriebsachse und eine zweite Drehachse eine Abtriebsachse des Riementriebs ist, sind nach einer ersten Alternative folgende Schritte vorgesehen:
a) Positionieren der ersten Drehachse und der zweiten Drehachse mit einem Abstand voneinander;
b) Aufsetzen eines gabelförmigen Messelements auf ein Riementrum derart, dass das Riementrum zwischen zwei Messzapfen des gabelförmigen Messelements angeordnet ist;
c) Drehen des Messelements um eine Achse, die parallel zu einer Drehachse eines Riemenrades ausgerichtet ist, wobei das Drehen mittels eines Antriebs des Messelements erfolgt, und Aufzeichnung von wenigstens einem Paar von Messwerten, die ein auf das Messelement einwirkendes Drehmoment und einen jeweiligen Drehwinkel des Messelements wiedergeben,
d) Bestimmen eines Riemenspannwertes, der mit der Riemenspannung korreliert, aus dem Messwert für das Drehmoment und/oder dem Messwert für den Drehwinkel;
e) Vergleich des Riemenspannwertes mit einem vorgegebenen unteren Grenzwert des Riemenspannwertes;
   e1) wenn der Riemenspannwert größer oder gleich dem vorgegebenen untere Grenzwert ist: weiter zu Schritt f);
   e2) wenn der Riemenspannwert kleiner als der vorgegebene untere Grenzwert ist: Positionieren der Drehachsen mit einem um einen Betrag vergrößerten Abstand zwischen den Drehachsen; Rücksprung zu Schritt c);
f) Vergleich des Riemenspannwertes mit einem vorgegebenen oberen Grenzwert des Riemenspannwertes;
   f1) wenn der Riemenspannwert kleiner oder gleich dem vorgegebenen oberen Grenzwert ist: weiter zu Schritt g);
   f2) wenn der Riemenspannwert größer als der vorgegebene obere Grenzwert ist: Positionieren der Drehachsen mit einem um einen Betrag verkleinerten Abstand zwischen den Drehachsen; Rücksprung zu Schritt c);
g) Fixieren der beiden Drehachsen in dem Abstand voneinander.

Nach diesem Verfahren kann die Riemenspannung sehr genau und in einer Serienfertigung reproduzierbar eingestellt werden.

Je nach Einrichtung der verwendeten Einstellvorrichtung kann auch der Schritt b) vor dem Schritt a) durchgeführt werden.

Für eine Abschlusskontrolle kann vorgesehen sein, dass nach dem Schritt g) ein Schritt h) erfolgt, in dem eine weitere Messung der Riemenspannung entsprechend den Schritten c) und d) durchgeführt wird.

Vorzugsweise wird der Betrag, um den der Abstand der Drehachsen im Schritt e2) vergrößert oder im Schritt f2) verkleinert wird, bei jedem Durchlauf des Verfahrens bis zum Erreichen des Schrittes g) verkleinert. Insbesondere kann der Betrag, um den der Abstand der Drehachsen im Schritt e2) vergrößert oder im Schritt f2) verkleinert wird, bei jedem Durchlauf des Verfahrens bis zum Erreichen des Schrittes g) halbiert werden.

Eine geringe und stets gleiche Belastung des Riemens im Messvorgang wird erzielt, wenn im Schritt c) das Drehen bis zum Erreichen eines vorgegebenen maximalen Drehmoments erfolgt und dass der Drehwinkel gemessen wird, der zum Erreichen des vorgegebenen Drehmoments erforderlich ist.

Es kann vorgesehen sein, dass im Schritt c) der Drehwinkel relativ zu einem Anfangsdrehwinkel gemessen wird, welcher aus einem ersten Anstieg des Drehmoments während der Drehung ermittelt wird, so dass die Messung der Riemenspannung ab dem ersten Kontakt der Messgabel mit dem Riemen erfolgt. Das Ergebnis des Verfahrens wird dadurch nochmals genauer sein. Auf diese Weise ist sichergestellt, dass bei der Messung die Spannung der verschiedenen zu vermessenden Riemen in einer Serie stets dieselbe ist, so dass spannungsabhängige Dehnungen und Reckeffekte mit berücksichtigt werden können, was wiederum zu erhöhter Messgenauigkeit und Reproduzierbarkeit führt.

Bei einem Verfahren zur Einstellung einer Riemenspannung in einem Riementrieb eines elektromechanischen Lenkgetriebes mit zwei achsparallelen, um jeweilige Drehachsen drehbaren Riemenrädern und einem die Riemenräder umschlingenden Riemen, wobei eine erste Drehachse eine Antriebsachse und eine zweite Drehachse eine Abtriebsachse des Riementriebs ist, sind nach einer zweiten Alternative folgende Schritte vorgesehen:
a) Positionieren der ersten Drehachse und der zweiten Drehachse mit einem Abstand voneinander;
b) Aufsetzen eines gabelförmigen Messelements auf ein Riementrum derart, dass das Riementrum zwischen zwei Messzapfen des gabelförmigen Messelements angeordnet ist;
c) Drehen des Messelements um eine Achse, die parallel zu einer Drehachse eines Riemenrades ausgerichtet ist, wobei das Drehen mittels eines Antriebs des Messelements erfolgt, und Aufzeichnung von wenigstens einem Paar von Messwerten, die ein auf das Messelement einwirkendes Drehmoment und einen jeweiligen Drehwinkel des Messelements wiedergeben,
d) Bestimmen eines Riemenspannwertes, der mit der Riemenspannung korreliert, aus dem Messwert für das Drehmoment und/oder dem Messwert für den Drehwinkel;
p) Verschieben der ersten Drehachse und der zweiten Drehachse gegeneinander bei kontinuierlicher Bestimmung des Riemenspannwertes gemäß Schritt d), bis der Riemenspannwert sowohl größer oder gleich einem vorgebbaren unteren Grenzwert des Riemenspannwertes als auch kleiner oder gleich einem vorgebbaren oberen Grenzwert des Riemenspannwertes ist;
q) Fixieren der beiden Drehachsen.

Auf diese Weise kann die Einstellung der Riemenspannung mit kontinuierlicher Messung während des Einstellvorgangs durchgeführt werden, was ebenfalls zu einem genauen und reproduzierbaren Ergebnis führt.

Für eine Abschlusskontrolle kann vorgesehen sein, dass nach dem Schritt q) ein Schritt h) erfolgt, in dem eine weitere Messung der Riemenspannung entsprechend den oben beschriebenen Schritten c) und d) durchgeführt wird.

Bei dem Verfahren nach der zweiten Alternative kann im Schritt c) der vorgegebene Drehwinkel relativ zu einem Bezugswinkel bestimmt sein, der gegenüber dem Riementrieb oder einem den Riementrieb umgebenden Gehäuse definiert ist.

Bei beiden Alternativen kann das Drehen im Schritt c) bis zu einem vorgegebenen Drehmoment oder bis zu einem vorgegebenen Drehwinkel zunächst in einer Drehrichtung erfolgen, wobei erste Messwerte für Drehmoment und Drehwinkel erfasst werden, und danach das Drehen in der entgegengesetzten Drehrichtung erfolgen, wobei zweite Messwerte Drehmoment und Drehwinkel in dieser Drehrichtung erfasst werden, und dass zur Berechnung der Riemenspannung die ersten und die zweiten Messwerte ausgewertet werden. Die beiden Sätze von Messwerten, die so gewonnen werden, erlauben eine Auswertung, die Inhomogenitäten und Asymmetrien des Riemens und der Kontaktzone, in der das Messwerkzeug an dem Riemen anliegt, zu berücksichtigen. Weiterhin ist mit Vorteil auch eine Wobbel-Funktion der Verdrehung des Messwerkzeugs zur Bestimmung eines Drehmoment-Winkel-Verlaufes denkbar und möglich.

Bei beiden alternativen Verfahren kann vorgesehen sein, dass vor dem Verschieben der ersten Drehachse und der zweiten Drehachse gegeneinander bei nicht gespanntem Riemen eine Messung des Drehmoments erfolgt, welches für eine Drehung der Messgabel um einen vorgegebenen Drehwinkel erforderlich ist. So kann ein Steifigkeitswert des ungespannten Riemens ermittelt werden, der dann bei der Auswertung der Messergebnisse zur Einstellung der Riemenspannung berücksichtigt werden kann.

In allen Ausführungsformen kann eine Schar von Messwertpaaren aus Drehwinkel und Drehmoment in einen Speicher eingespeichert werden. Diese Tupel können verglichen werden mit vorgegebenen Wertepaaren, so dass daraus unter Eliminierung weiterer Einflussgrößen die Genauigkeit des Messergebnisses für die Riemenspannung weiter erhöht werden kann. Es ist dabei möglich, eine mittlere Abweichung zwischen den vorgegebenen Wertepaaren und den gemessenen Wertepaaren zu bestimmen und daraus eine Aussage zu treffen, ob die Riemenspannung in einem richtigen Wertebereich liegt. Ist die Summe der Einzelabweichung aus den vorgegebenen Wertepaaren minus den gemessenen Wertepaaren größer Null und größer als ein vorgegebener, in Versuchen ermittelter Wert, muss der Riemen nachgespannt werden, da die Riemenspannung zu niedrig ist. Ist die Summe der Einzelabweichung aus den vorgegebenen Wertepaaren minus den gemessenen Wertepaaren kleiner Null und kleiner als ein zweiter vorgegebener, in Versuchen ermittelter Wert, muss die Riemenspannung verringert werden, da die Riemenspannung zu hoch ist.

Nachfolgend werden Ausführungsbeispiele der vorliegenden Erfindung anhand der Zeichnung beschrieben. Es zeigen:
- Figur 1:: Ein an sich bekanntes elektromechanisches Lenkgetriebe in einer Seitenansicht;
- Figur 2:: Das Lenkgetriebe aus Figur 1 in einer Draufsicht;

- Figur 3:: Den Zahnriementrieb des Lenkgetriebes aus Figur 1 in einer isolierten perspektivischen Darstellung mit einer beabstandeten Messga bel;
- Figur 4:: Das Riemengetriebe aus Figur 3 mit aufgesetzter Messgabel;
- Figur 5:: Das Riemengetriebe des Lenkgetriebes aus Figur 1 in einem Querschnitt entlang der Linie A-A in einer ersten Spannposition;
- Figur 6:: Das Getriebe aus Figur 5 in einer zweiten Spannposition mit höherer Riemenspannung;
- Figur 7:: Eine perspektivische Darstellung mit einer Messgabel, die auf einen Zahnriemen aufgesetzt und gespannt ist;
- Figur 8:: Die Messgabel aus Figur 7 in einer Stirnansicht;
- Figur 9:: Die Messgabel aus Figur 8 in einer anderen Stellung; sowie
- Figur 10:: Eine andere Ausführungsform einer Messgabel mit zylindrischen Messzapfen.

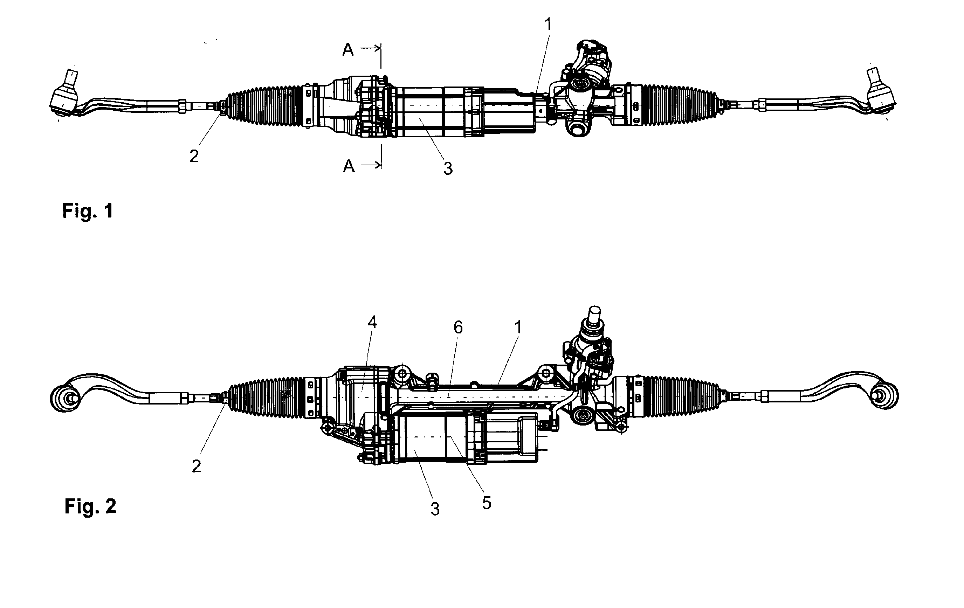

Die Figur 1 zeigt eine an sich bekannte mechanische Servolenkung für ein Kraftfahrzeug mit einem Lenkungsgehäuse 1, in dem eine Zahnstange 2 längs verschieblich gelagert ist. Zur Servounterstützung der Lenkbewegung ist ein elektrischer Servomotor 3 vorgesehen, der über ein Riemengetriebe und einen achsparallelen Kugelumlauf auf die Zahnstange 2 wirkt.

Die Figur 2 zeigt das Lenkgetriebe aus Figur 1 in einer um 90 Grad um die Längsachse der Zahnstange 2 gedrehten Darstellung. Das Lenkungsgehäuse 1 weist einen hier erkennbaren Gehäuseabschnitt 4 auf, in dem der Kugelumlauf für den Antrieb der Zahnstange 2 angeordnet ist. Es ist erkennbar, dass eine Drehachse 5 des Servomotors 3 parallel zu einer Längsachse 6 der Zahnstange 2 ausgerichtet ist, wobei die Längsachse 6 die Verschieberichtung der Zahnstange im Betrieb darstellt.

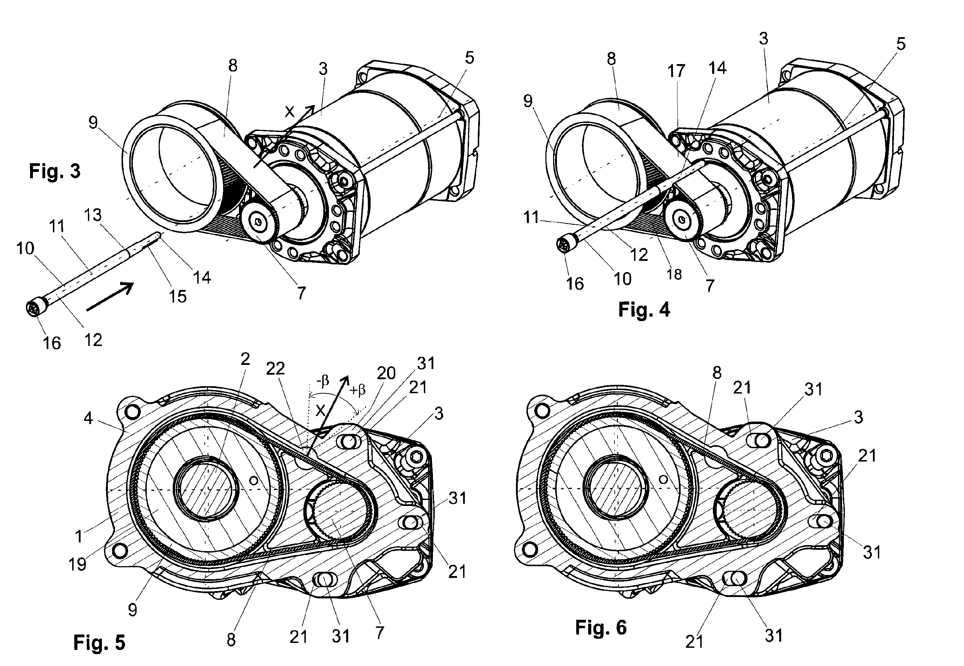

Die Figur 3 zeigt perspektivisch den Servomotor 3 mit seiner Drehachse 5 aus den Figuren 1 und 2. Der Servomotor 3 verfügt an seiner Abtriebsseite über ein Ritzel 7, das die angetrieben Seite des Riementriebs bildet und das mit einem Zahnriemen 8 in Eingriff steht. Der Zahnriemen 8 treibt eine Riemenscheibe 9 an, die die Abtriebsseite des Riementriebs darstellt und die mit dem nicht dargestellten Kugelumlauf in Eingriff steht. Die Riemenscheibe 9 umgibt den Kugelumlauf und die Zahnstange 2 in eingebautem Zustand gemäß Figur 2.

In einem Abstand von dem Zahnriemen 8 ist eine Messgabel 10 dargestellt, die auf den Zahnriemen 8 aufsetzbar ist. Die Messgabel 10 weist eine Symmetrieachse 11 auf, die zugleich auch im Betrieb die Drehachse der Messgabel 10 darstellt. Weiter weist die Messgabel 10 einen Schaft 12 auf, der langgestreckt zylindrisch ausgebildet ist. An einem ersten freien Ende 13 des Schaftes 12 sind 2 sich gegenüber liegende Zapfen 14 und 15 ausgebildet, die an dem Schaft 12 einstückig angeformt sind, die sich parallel zu der Drehachse 11 erstrecken und voneinander beabstandet sind. An dem Ende das den Messzapfen 14 gegenüber liegt, trägt die Messgabel 10 einen Anschluß 16 für einen Antrieb. Der Anschluß 16 ist hier als Innenvierkant ausgebildet.

Die Figur 4 zeigt die Anordnung aus Figur 3. Gleiche Bauelemente tragen geleiche Bezugsziffern.

In der Figur 4 ist dargestellt, wie die Messgabel 10 auf den Zahnriemen aufgesetzt ist. Der Zahnriemen 8 wird dabei zwischen die Messzapfen 14 und 15 eingeführt, so dass in der Figur 4 nur der Messzapfen 14 sichtbar ist, der an der Außenseite des Zahnriemens an einem Riementrum 17 anliegt, das frei zwischen dem Ritzel 7 und der Riemenscheibe 9 verläuft. Dem Riementrum 17 gegenüber liegt ein zweites Riementrum 18. Die Messzapfen 14 und 15 erstrecken sich mit ihren Längsachsen parallel zu der Oberfläche des Zahnriemens 8, der im wesentlichen flach ausgebildet ist. Die Längsachse der Zapfen und die Längsachse 11 der Messgabel 10 verlaufen dabei parallel zu der Oberfläche des Riementrums 17 und senkrecht zu der Laufrichtung des Zahnriemens 8 im Betrieb.

Bei den in Figur 4 gezeigten Ausführungsbeispiel ist die Länge der Messzapfen 14 und 15 so gewählt, dass sie den Zahnriemen 8 in seiner gesamten Breite überdecken und noch etwa 10% über die Breite des Zahnriemens hinausstehen. Es kann eine Überdeckung von nur 70%der Reimenbreite in vielen Fällen für eine erforderliche Messgenauigkeit ausreichend sein. Eine vollständige Überdeckung der Breite des Zahnriemens durch die Messzapfen 14, 15 der Messgabel 10 ist jedoch zu bevorzugen. Dabei ist wegen der Vereinfachung der Handhabung sogar noch zu bevorzugen, dass die Messzapfen etwa 10% über die Riemenbreite hinausstehen.

Die Figur 5 zeigt einen Querschnitt entlang der Linie A-A aus Figur 1. Gleiche Bauelemente tragen gleiche Bezugsziffern. In diesem Querschnitt ist die Zahnstange 2 mit einem Kugelumlauf 19 dargestellt, wobei der Kugelumlauf 19 unmittelbar mit der umgebenden Riemenscheibe 9 antriebsmäßig verbunden ist. Der Kugelumlauf 19 wirkt auf einen Gewindespindelabschnitt der Zahnstange 2 als Spindeltrieb zur Wandlung der Drehbewegung, die durch den Servomotor 3 über den Riementrieb erzeugt wird, in eine Längsbewegung in Richtung der Längsachse 6 der Zahnstange 2, wie sie zu Lenkbewegungen in Kraftfahrzeugen erforderlich ist.

Das Getriebegehäuse 4 weist einen Flansch 20 auf, in dem der Servomotor 3 mit Befestigungsschrauben 31 über Langlöcher 21 zur Spannung des Zahnriemens 8 verschieblich befestigbar ist. Durch Verschieben des Elektromotors in den Langlöchern 21 wird der Abstand der Drehachse 5 des Elektromotors von der Zahnstange 2 in an sich bekannter Weise variiert. Das Getriebegehäuse 4 weist eine parallel zu der Drehachse 5 des Elektromotors 1 verlaufende Bohrung 22 auf, in die die Messgabel 10 so einsetzbar ist, dass der Messzapfen 14 an der äußeren Oberfläche des Zahnriemens 8 positioniert wird, während der andere Messzapfen 15 an der inneren, verzahnten Oberfläche des Zahnriemens 8 positioniert wird. Entsprechend ist der Freiraum zwischen den Zapfen oder auch Stiften der Messgabel senkrecht zur Flächennormalen X der äußeren Riemenoberfläche ausgerichtet. Die Messgabel 10 ist in der Bohrung 22 um einen Winkel +/-ß drehbar. Die Figur 6 zeigt einen Querschnitt entsprechend Figur 5, wobei der Elektromotor 3 mit seinen Befestigungsschrauben 31 in den Langlöchern 21 in eine zahnstangenferne Position verlagert ist. In dieser Position ist die Spannung des Zahnriemens 8 maximal. Die Position des Elektromotors 3 wird in den Langlöchern mittels den Befestigungsschrauben 31 fixiert.

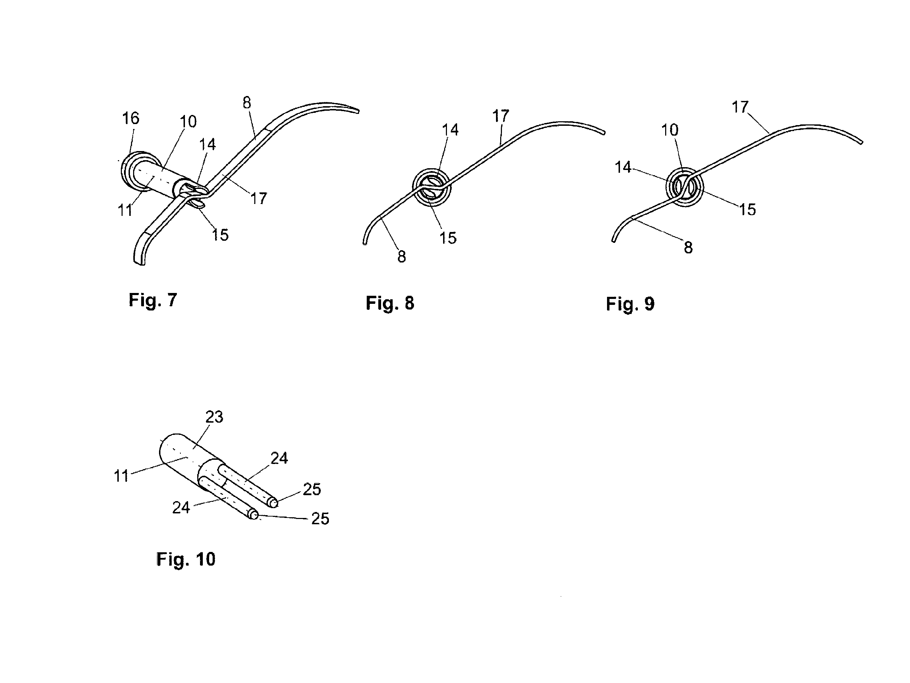

Die Figur 7 zeigt in einer perspektivischen Prinzipdarstellung die Messgabel 10 mit den Messzapfen 14 und 15 sowie mit dem Zahnriemen 8, der zwischen den Messzapfen 14 und 15 verläuft, wie dies bereits zu Figur 4 beschrieben ist. Die Messgabel 10 ist um ihre Drehachse 11 gedreht, so dass der Messzapfen 14 mit einer in Drehrichtung voreilenden Seite auf die äußere Oberfläche des Zahnriemens 8 drückt, während der Messzapfen 15 mit einer voreilenden Seite gegen die im Betrieb innen liegende, verzahnte Oberfläche des Zahnriemens 8 drängt. Der Zahnriemen 8 wird dadurch an der mit der Messgabel 10 beaufschlagten Stelle S-förmig verformt.

Durch einen an dem Anschluß 16, der in der Figur 7 nicht sichtbar ist, angreifenden Antrieb mit einem Drehwinkelsensor und einem Drehmomentsensor kann eine Funktion des Drehmoments in Abhängigkeit von dem Drehwinkel aufgenommen werden. Diese Funktion ist kennzeichnend für die Riemenspannung des Zahnriemens 8. Die Messgabel 10 erlaubt aufgrund ihrer Ausgestaltung mit stirnseitigen Messzapfen 14 und 15 sowie aufgrund ihrer Drehbarkeit um die Drehachse 11 eine solche Messung, deren Präzision besonders hoch ist und die insbesondere auch Messwerte liefert, die eine erweiterte Auswertung der Messung erlauben, da beispielsweise die Biegesteifigkeit des Zahnriemens gemessen und berücksichtigt werden kann.

Die Figur 8 zeigt die Anordnung aus Figur 7 in einer Stirnansicht in Richtung der Drehachse 11.

Die Figur 9 zeigt die Messgabel 10 mit den Messzapfen 14 und 15 im Eingriff mit dem Zahnriemen 8, wobei die Messgabel 10 um ihre Drehachse entgegengesetzt zu der Darstellung gemäß Figur 7 und Figur 8 verdreht ist. Diese Darstellung zeigt dass zur Messung der Riemenspannung die Messgabel 10 in 2 Richtungen verdreht werden kann, nämlich einmal in der Darstellung aus Figur 8 im Uhrzeigersinn und in der Darstellung gemäß Figur 9 gegen den Uhrzeigersinn. Beide Drehbewegungen können für sich zur Messung der Riemenspannung eingesetzt werden. Ein besonders genaues Ergebnis ergibt sich, wenn für eine Messung der Riemenspannung des Zahnriemens 8 beide Drehbewegungen durchgeführt, separat erfasst und dann gemeinsam ausgewertet werden. Dadurch kann beispielsweise eine Asymmetrie des Riementriebs berücksichtigt und das Messergebnis entsprechend korrigiert werden. Es ist dabei auch denkbar und möglich, diese Drehung mit vorgegebener Frequenz abwechselnd in beide Drehrichtungen mehrfach auszuführen (=Wobbelfunktion) und die Auswertung über mehrere Zyklen hinweg durchzuführen.

Die Messgabel 10 ist im Bereich der Messzapfen 14 und 15 so ausgebildet, dass die äußere Oberfläche der Messzapfen 14 und 15, die nicht in Kontakt mit dem Zahnriemen 8 kommt, Teil eines zylindrischen Mantels ist, so dass die äußeren Oberflächen der Messzapfen 14 und 15 nicht über die äußere Umfangsfläche des Schaftes 12 in Radialrichtung nach außen hervorstehen. Der Zwischenraum, der zwischen den Messzapfen 14 und 15 zur Aufnahme des Zahnriemens 8 gebildet ist, ist als Schlitz in das Material der Messgabel 10 eingearbeitet. Die Formgebung der inneren Oberflächen der Messzapfen 14 und 15 ist abgerundet, damit keine scharfkantigen Bereiche mit dem Zahnriemen 8 in Kontakt kommen. Die innere Oberfläche kann beispielsweise teilelliptisch, teilkreisförmig oder auch flach mit abgerundeten Übergangsbereichen sein. Der Querschnitt der Messzapfen 14 und 15 ist im Wesentlichen gleich, wie dies in Figur 8 und Figur 9 ersichtlich ist. Der Querschnitt der Messzapfen 14 und 15 ist auch in Richtung der Drehachse 11 in dem Bereich, in dem die Messgabel 10 im Betrieb an dem Zahnriemen 8 anliegt, konstant.

Figur 10 zeigt schließlich eine Messgabel 23, die als Messzapfen 2 zylindrische Stifte 24 aufweist. Die Stifte 24 sind an ihrem freien Enden 25 abgerundet. Diese Messgabel 23 kann ebenso wie die Messgabel 10 in der beschriebenen Weise auf den Zahnriemen 8 aufgesetzt werden und durch Verdrehung um die Drehachse 11 dann die Funktion Drehwinkel/Drehmoment aufgezeichnet werden. Es ist dabei auch denkbar und möglich, diese Drehung mit vorgegebener Frequenz abwechselnd in beide Drehrichtungen mehrfach auszuführen (=Wobbelfunktion) und die Auswertung über mehrere Zyklen hinweg durchzuführen.

Das erfindungsgemäße Verfahren zur Einstellung der Riemenspannung wird nun nach der ersten Alternative wie folgt ausgeführt:
Zunächst werden die aus den Figuren 1 bis 5 ersichtlichen Bauelemente so weit montiert, dass der Zahnriemen 8 auf dem Ritzel 7 und der Riemenscheibe 9 aufliegt. Die Schrauben 31 sind nicht fest angezogen, sondern erlauben noch eine Bewegung in den Langlöchern 21. Der Zahnriemen ist in dieser Stellung noch nicht betriebsbereit gespannt. Die Position der Bauelemente zueinander, die die Riemenspannung bestimmt, ist durch den Abstand der Drehachse des Ritzels 7 von der Drehachse der Riemenscheibe 9 definiert.

Zur Einstellung der Riemenspannung wird nun die erste Drehachse, die von der Drehachse des Ritzels 7 dargestellt ist, gegenüber der zweiten Drehachse, die von der Drehachse der Riemenscheibe 9 dargestellt ist, positioniert und ggf. verschoben (Schritt a). Eine Erhöhung der Riemenspannung tritt dann ein, wenn die erste Drehachse von der zweiten Drehachse entfernt wird.

Dann wird die Messgabel 10 als gabelförmiges Messelement auf das Riementrum 17 durch die Bohrung 22 aufgesetzt, so dass das Riementrum 17 zwischen zwei Messzapfen 14 und 15 der Messgabel 10 liegt (Schritt b). Es kann auch vorgesehen sein, dass das Aufsetzen der Messgabel 10 auf das Riementrum 17 vor dem erstmaligen Verschieben der Drehachse des Ritzels 7 gegenüber der Drehachse der Riemenscheibe 9 erfolgt, so dass der Schritt b vor dem Schritt a ausgeführt wird.

Nachdem nun die Positionierung der Drehachsen relativ zueinander erfolgt ist und dadurch ggf. ein erster Spannvorgang des Riemens 8 durchgeführt wurde, wird das Messelement 10 um die Achse 11, die parallel zu der ersten Drehachse und der zweiten Drehachse ausgerichtet ist, gedreht, wobei das Drehen mittels eines Antriebs des Messelements erfolgt. Dabei werden Messwerte aufgezeichnet, die ein auf das Messelement 11 einwirkendes Drehmoment und einen Drehwinkel des Messelements 11 wiedergeben (Schritt c).

Aus den Messwerten für das Drehmoment/oder den Messwerten für den Drehwinkel wird in einem weiteren Schritt ein Riemenspannwert ermittelt, der für die Riemenspannung kennzeichnend ist (Schritt d).

Nun wird der so gewonnene Riemenspannwert mit einem für den vorliegenden Riementrieb vorgegebenen unteren Grenzwert verglichen. Es können zwei Fälle eintreten:
Wenn die Riemenspannung bzw. der Riemenspannwert bei dieser Messung größer oder gleich dem vorgesehenen unteren Grenzwertes ist, wird der nachfolgend beschriebene Schritt f) ausgeführt.

Wenn die Riemenspannung bzw. der Riemenspannwert bei dieser Messung noch unterhalb des vorgesehenen unteren Grenzwertes liegt, wird das Verschieben der ersten Drehachse gegen die zweite Drehachse erneut durchgeführt (Schritt e2), um die Riemenspannung zu verändern. Die Riemenspannung wird dabei erhöht werden. Danach wird wiederum der Schritt c ausgeführt, in dem das Messelement erneut gedreht wird. Aus den neuen Messwerten wird wieder in einem Schritt d die Riemenspannung berechnet. Nun kann entweder die Riemenspannung noch außerhalb der Sollwerte liegen, so dass eine erneute Spannung im Schritt e2 nötig ist, oder die Riemenspannung kann innerhalb des Sollwertebereichs liegen, so dass das Einstellverfahren weiter zu dem nachfolgend beschriebenen Schritt f springt (Schritt e1).

Nun wird der Riemenspannwert mit einem für den vorliegenden Riementrieb vorgegebenen oberen Grenzwert verglichen. Es können wiederum zwei Fälle eintreten:
Wenn die Riemenspannung bzw. der Riemenspannwert bei dieser Messung noch kleiner oder gleich dem vorgesehenen unteren Grenzwertes ist, wird der nachfolgend beschriebene Schritt g) ausgeführt.

Wenn die Riemenspannung bzw. der Riemenspannwert bei dieser Messung oberhalb des vorgesehenen oberen Grenzwertes liegt, wird das Verschieben der ersten Drehachse gegen die zweite Drehachse erneut durchgeführt (Schritt f2), um die Riemenspannung zu verändern. Die Riemenspannung wird dabei verringert werden. Danach wird wiederum der Schritt c ausgeführt, in dem das Messelement erneut gedreht wird. Aus den neuen Messwerten wird wieder in einem Schritt d der Riemenspannwert berechnet. Da der Schritt e) mit seinen Teilschritten e1) und e2) bereits durchgeführt wurde, wird vom Schritt d) nun direkt zum Schritt f) gesprungen.

Nun kann entweder die Riemenspannung noch oberhalb des vorgegebenen oberen Grenzwertes liegen, so dass eine erneute Verringerung der Spannung im Schritt f2 nötig ist, oder der Riemenspannwert bzw. die Riemenspannung kann kleiner oder gleich dem vorgegebenen oberen Grenzwert sein. Der Riemenspannwert liegt nun innerhalb des Sollwertebereichs, so dass das Einstellverfahren weiter zu dem nachfolgend beschriebenen Schritt g springt, in dem die erzielte Position der Drehachsen durch Fixieren der beiden Drehachsen, beispielsweise durch Anziehen der Schrauben 31, abgeschlossen wird.

Dieses Verfahren kann als iteratives Verfahren bezeichnet werden, da auf einen Verschiebevorgang der beiden Drehachsen gegeneinander zur Spannung des Zahnriemens jeweils ein Messvorgang erfolgt und abhängig von dem Messvorgang dann ein weiterer Verschiebevorgang vorgenommen wird, wenn die Riemenspannung außerhalb der angestrebten Sollwerte liegt.

Der Verschiebevorgang wird in den durchgeführten Schritten sukzessive verkleinert, damit eine Annäherung an den Sollwertebereich in kleiner werdenden Schritten erfolgen kann. Die zu erzielende Einstellgenauigkeit kann dadurch verbessert werden.

Das Verfahren wird so lange durchgeführt, bis der Riemenspannwert bzw. die Riemenspannung innerhalb der Sollwerte liegt. Zum Verschieben der Drehachsen des Ritzels 7 einerseits und der Riemenscheibe 9 andererseits gegeneinander kann ein nicht dargestellter Mechanismus verwendet werden, der beispielsweise einen Gehäusespalt zwischen dem Lenkungsgehäuse 1 und dem Servomotor 3 vergrößert oder verkleinert. In einer Alternative kann die Lagerung des Servomotors 3 an dem Lenkungsgehäuse 1 auch anders ausgebildet sein als in den Figuren 5 und 6 dargestellt. So kann statt der Langlöcher 21 auch ein Schwenklager vorgesehen sein, in dem der Elektromotor 3 gegenüber dem Lenkungsgehäuse 1 unter Beibehaltung der Parallelität der Drehachsen gekippt werden kann. Durch eine Kippung weg von dem Lenkungsgehäuse 1 kann die Riemenspannung des Zahnriemens 8 erhöht werden. Eine Fixierung des Elektromotors 3 gegenüber dem Lenkungsgehäuse 1 kann dann ebenfalls über ein Langloch und eine Schraube erfolgen.

Ein erfindungsgemäßes Verfahren kann nach einer Alternative auch nach Art eines Regelkreises durchgeführt werden. Bei diesem alternativen Verfahren wird zunächst wieder die Baugruppe aus den Figuren 5 und 6 vormontiert, so dass der Zahnriemen 8 auf dem Ritzel 7 und der Riemenscheibe 9 aufliegt, jedoch noch nicht gespannt ist. Das Messelement 10 wird dann in Richtung der Symmetrieachse 11 in die Bohrung 22 eingesetzt, so dass die Messzapfen 14 und 15 beidseits des Riementrums 17 liegen (Schritte a und b).

Nun wird das Messelement 10 um einen vorgegebenen Drehwinkel, beispielsweise 90 °, um die Symmetrieachse 11 gedreht, die parallel zu den beiden Drehachsen der Riemenräder liegt. Das Drehen erfolgt mittels eines Antriebs des Messelements 10, wobei Messwerte aufgenommen werden, die das einwirkende Drehmoment wiedergeben (Schritt c). Die Position der Messgabel wird im folgenden beibehalten. Aus dem Drehmoment wird dann der Riemenspannwert bestimmt (Schritt d).

Nun wird mit einem Aktuator die erste Drehachse des Ritzels 7 gegenüber der zweiten Drehachse der Riemenscheibe 9 verschoben, wobei die Riemenspannung bei dem vorgegebenen Drehwinkel des Messelements 10 über die Erfassung des sich ändernden Drehmoments kontinuierlich weiter gemessen wird. Das Verschieben der Drehachsen gegeneinander erfolgt so lange, bis die Riemenspannung des Zahnriemens 8 innerhalb eines Sollwertesbereichs liegt, also sowohl größer oder gleich einem unteren Grenzwert als auch kleiner oder gleich einem oberen Grenzwert ist (Schritt p). Danach werden die beiden Drehachsen relativ zueinander fixiert, beispielsweise durch Anziehen der Schrauben 31 aus Figur 6 (Schritt q).

Bei beiden alternativen Verfahren wird die Messung der Riemenspannung durch Drehung eines gabelförmigen Messelements 10 zur Grundlage der Einstellung der Riemenspannung gemacht. Auf diese Weise wird eine präzise und in der Serienfertigung stets reproduzierbare Einstellung der Riemenspannung in einer automatisch arbeitenden Vorrichtung möglich.

Zur Qualitätssicherung kann bei beiden Verfahren nach der Fixierung der Drehachsen relativ zueinander eine weitere Messung der Riemenspannung durch Drehen des Messelements und Aufzeichnen von Drehwinkel und Drehmoment erfolgen. Hierdurch wird dann auch eine Änderung der Riemenspannung durch Relaxation der Bauelemente erfasst. Sollte durch solche Relaxationseffekte die Riemenspannung außerhalb der Sollwerte liegen, so kann der Riemen nachgespannt werden, indem entweder das erste oder das zweite Verfahren erneut durchgeführt wird. Wenn die Riemenspannung zu weit von dem Sollwert abweicht, kann auch davon ausgegangen werden, dass der Riemen fehlerhaft ist und das Bauteil nicht freigegeben werden kann.

Vor dem eigentlichen Einstellvorgang ist der Zahnriemen 8 noch nicht gespannt. Eine bevorzugte Ausführungsform der Erfindung sieht vor, dass mit der Messgabel 10 vor dem Spannen des Zahnriemens 8 zunächst eine Messung der Steifigkeit des Riemens im nicht gespannten Zustand erfolgt. Dazu wird ebenso wie bei der Messung der Riemenspannung das Messelement 10 gedreht und dabei werden Drehwinkel und Drehmoment erfasst. Die Steifigkeit des Riemens kann damit zumindest näherungsweise bestimmt werden, so dass diese Steifigkeit als ein Faktor in die Bestimmung der Riemenspannung bei gespannten Riemen später im Verfahrensablauf berücksichtigt werden kann. Wie bei der Messung der Riemenspannung kann auch bei der Messung der Riemensteifigkeit die Messgabel nach Art einer Wobbel-Funktion hin und her gedreht werden.

Für die Berechnung des Riemenspannwertes oder der Riemenspannung aus den Messwerten für Drehmoment und Drehwinkel der Messgabel 10 können Tabellen oder Funktionen herangezogen werden, die analytisch oder empirisch gewonnen wurden.

### Bezugsziffernliste

- 1.: Lenkungsgehäuse
- 2.: Zahnstange
- 3.: Servomotor
- 4.: Gehäuseabschnitt
- 5.: Drehachse
- 6.: Längsachse
- 7.: Ritzel
- 8.: Zahnriemen
- 9.: Riemenscheibe
- 10.: Messgabel
- 11.: Symmetrieachse
- 12.: Schaft
- 13.: freies Ende
- 14.: Zapfen
- 15.: Zapfen
- 16.: Anschluss
- 17.: Riementrum
- 18.: Riementrum
- 19.: Kugelumlauf
- 20.: Flansch
- 21.: Langlöcher
- 22.: Bohrung
- 23.: Messgabel
- 24.: Stifte
- 25.: freie Enden
- 31.: Befestigungsschrauben
- ß, ßx: Verdrehwinkel
- N, Nx: Drehmoment
- X: Flächennormale

## Patentansprüche

1. Verfahren zur Einstellung einer Riemenspannung in einem Riementrieb eines elektromechanischen Lenkgetriebes mit zwei achsparallelen, um jeweilige Drehachsen drehbaren Riemenrädern (7, 9) und einem die
Riemenräder umschlingenden Riemen, wobei eine erste Drehachse eine Antriebsachse und eine zweite Drehachse eine Abtriebsachse des Riementriebs ist, **gekennzeichnet durch** folgende Schritte:
a) Positionieren der ersten Drehachse und der zweiten Drehachse mit einem Abstand voneinander;
b) Aufsetzen eines gabelförmigen Messelements (10,23) auf ein Riementrum (17, 18) 15 derart, dass das Riementrum zwischen zwei Messzapfen (14, 15,24) des
gabelförmigen Messelements angeordnet und die Messzapfen (14, 15, 24) an gegenüberliegenden Seiten des Riementrums (17, 18) angeordnet sind,
c) Drehen des Messelements (10, 23) um eine Achse (11), die parallel zu einer
Drehachse eines Riemenrades ausgerichtet ist, wobei das Drehen mittels eines Antriebs des Messelements erfolgt, und Aufzeichnung von wenigstens einem Paar von Messwerten, die ein auf das Messelement einwirkendes Drehmoment und einen jeweiligen Drehwinkel des Messelements (10, 23) wiedergeben,
d) Bestimmen eines Riemenspannwertes, der mit der Riemenspannung korreliert, aus dem Messwert für das Drehmoment und/oder dem Messwert für den Drehwinkel;
e) Vergleich des Riemenspannwertes mit einem vorgegebenen unteren Grenzwert des Riemenspannwertes;
e1) wenn der Riemenspannwert größer oder gleich dem vorgegebenen untere Grenzwert ist: weiter zu Schritt f);
e2) wenn der Riemenspannwert kleiner als der vorgegebene untere Grenzwert ist: Positionieren der Drehachsen mit einem um einen Betrag vergrößerten Abstand zwischen den Drehachsen; Rücksprung zu Schritt c);
f) Vergleich des Riemenspannwertes mit einem vorgegebenen oberen Grenzwert des Riemenspannwertes;
f1) wenn der Riemenspannwert kleiner oder gleich dem vorgegebenen oberen Grenzwert ist: weiter zu Schritt g);
f2) wenn der Riemenspannwert größer als der vorgegebene obere Grenzwert ist: Positionieren der Drehachsen mit einem um einen Betrag verkleinerten Abstand zwischen den Drehachsen; Rücksprung zu Schritt c);
g) Fixieren der beiden Drehachsen in dem Abstand voneinander.

2. Verfahren nach Anspruch 1, **dadurch gekennzeichnet, dass** der Schritt b) vor dem Schritt a) durchgeführt wird.

3. Verfahren nach einem der vorhergehenden Ansprüche, **dadurch gekennzeichnet, dass** nach dem Schritt g) ein Schritt h) erfolgt, in dem eine weitere Messung der Riemenspannung entsprechend den Schritten c) und d) durchgeführt wird.

4. Verfahren nach einem der vorhergehenden Ansprüche, **dadurch gekennzeichnet, dass** der Betrag, um den der Abstand der Drehachsen im Schritt e2) vergrößert oder im Schritt f2) verkleinert wird, bei jedem Durchlauf des Verfahrens bis zum Erreichen des Schrittes g) verkleinert wird.

5. Verfahren nach einem der vorhergehenden Ansprüche, **dadurch gekennzeichnet, dass** der Betrag, um den der Abstand der Drehachsen im Schritt e2) vergrößert oder im Schritt f2) verkleinert wird, bei jedem Durchlauf des Verfahrens bis zum Erreichen des Schrittes g) halbiert wird.

6. Verfahren nach einem der vorhergehenden Ansprüche, **dadurch gekennzeichnet, dass** im Schritt c) das Drehen bis zum Erreichen eines vorgegebenen maximalen Drehmoments erfolgt und dass der Drehwinkel gemessen wird, der zum Erreichen des vorgegebenen Drehmoments erforderlich ist.

7. Verfahren nach einem der vorhergehenden Ansprüche, **dadurch gekennzeichnet, dass** im Schritt c) der Drehwinkel relativ zu einem Anfangsdrehwinkel gemessen wird, welcher aus einem ersten Anstieg des Drehmoments während der Drehung ermittelt wird.

8. Verfahren zur Einstellung einer Riemenspannung in einem Riementrieb eines elektromechanischen Lenkgetriebes mit zwei achsparallelen, um jeweilige Drehachsen drehbaren Riemenrädern (7, 9) und einem die Riemenräder umschlingenden Riemen, wobei eine erste Drehachse eine Antriebsachse und eine zweite Drehachse eine Abtriebsachse des Riementriebs ist, **gekennzeichnet durch** folgende Schritte:
a) Positionieren der ersten Drehachse und der zweiten Drehachse mit einem Abstand voneinander;
b) Aufsetzen eines gabelförmigen Messelements (10, 23) auf ein Riementrum (17, 18) derart, dass das Riementrum zwischen zwei Messzapfen (14, 15, 24) des gabelförmigen Messelements (10, 23) angeordnet und die Messzapfen (14, 15, 24) an gegenüberliegenden Seiten des Riementrums (17, 18) angeordnet sind,
c) Drehen des Messelements (10, 23) um eine Achse (11), die parallel zu einer Drehachse eines Riemenrades ausgerichtet ist, wobei das Drehen mittels eines Antriebs des Messelements (10,23) erfolgt, und Aufzeichnung von wenigstens einem Paar von Messwerten, die ein auf das Messelement einwirkendes Drehmoment und einen jeweiligen Drehwinkel des Messelements (10, 23) wiedergeben,
d) Bestimmen eines Riemenspannwertes, der mit der Riemenspannung korreliert, aus dem Messwert für das Drehmoment und/oder dem Messwert für den Drehwinkel;
p) Verschieben der ersten Drehachse und der zweiten Drehachse gegeneinander bei kontinuierlicher Bestimmung des Riemenspannwertes gemäß Schritt d), bis der Riemenspannwert sowohl größer oder gleich einem vorgebbaren unteren Grenzwert des Riemenspannwertes als auch kleiner oder gleich einem vorgebbaren oberen Grenzwert des Riemenspannwertes ist;
q) Fixieren der beiden Drehachsen.

9. Verfahren nach Anspruch 8, **dadurch gekennzeichnet, dass** nach dem Schritt q) ein Schritt h) erfolgt, in dem eine weitere Messung der Riemenspannung entsprechend den Schritten c) und d) durchgeführt wird.

10. Verfahren nach einem der vorhergehenden Ansprüche 8 - 10, **dadurch gekennzeichnet, dass** im Schritt c) der vorgegebene Drehwinkel relativ zu einem Bezugswinkel erfolgt, der gegenüber dem Riementrieb oder einem den Riementrieb umgebenden Gehäuse definiert ist.

11. Verfahren nach einem der vorhergehenden Ansprüche, **dadurch gekennzeichnet, dass** das Drehen im Schritt c) bis zu einem vorgegebenen Drehmoment oder bis zu einem vorgegebenen Drehwinkel zunächst in einer Drehrichtung erfolgt, wobei erste Messwerte für Drehmoment und Drehwinkel erfasst werden, und danach das Drehen in der entgegengesetzten Drehrichtung erfolgt, wobei zweite Messwerte für Drehmoment und Drehwinkel in dieser Drehrichtung erfasst werden, und dass zur Berechnung des Riemenspannwertes die ersten und die zweiten Messwerte ausgewertet werden.

12. Verfahren nach einem der vorhergehenden Ansprüche, **dadurch gekennzeichnet, dass** vor dem Positionieren der ersten Drehachse und der zweiten Drehachse gegeneinander bei nicht gespanntem Riemen eine Messung des Drehmoments erfolgt, welches für eine Drehung der Messgabel um einen vorgegebenen Drehwinkel erforderlich ist, um einen Steifigkeitswert des Riemens zu ermitteln.

## Claims

1. Method for adjusting a belt tension in a belt drive of an electromechanical steering gear mechanism comprising two axially parallel belt pulleys (7, 9), which can be rotated about respective rotation axes, and a belt which loops around the belt pulleys, wherein a first rotation axis is a drive axle and a second rotation axis is an output axle of the belt drive, **characterized by** the following steps:
a) positioning the first rotation axis and the second rotation axis at a distance from one another;
b) mounting a fork-like measuring element (10, 23) on a belt strand (17, 18) in such a way that the belt strand is arranged between two measuring pins (14, 15, 24) of the fork-like measuring element and the measuring pins (14, 15, 24) are arranged on opposite sides of the belt strand (17, 18);
c) rotating the measuring element (10, 23) about an axis (11) which is oriented parallel to a rotation axis of a belt pulley, wherein the rotation is performed by means of a drive of the measuring element, and recording at least one pair of measurement values which represent a torque, which acts on the measuring element, and a respective rotation angle of the measuring element (10, 23),
d) determining a belt tension value, which is correlated to the belt tension, from the measurement value for the torque and/or the measurement value for the rotation angle;
e) comparing the belt tension value with a prespecified lower limit value of the belt tension value;
e1) if the belt tension value is greater than or equal to the prespecified lower limit value: continuing to step f);
e2) if the belt tension value is less than the prespecified lower limit value: positioning the rotation axes with an increased distance between the rotation axes; returning to step c);
f) comparing the belt tension value with a prespecified upper limit value of the belt tension value;
f1) if the belt tension value is less than or equal to the prespecified upper limit value: continuing to step g);
f2) if the belt tension value is greater than the prespecified upper limit value: positioning the rotation axes with a reduced distance between the rotation axes; returning to step c);
g) fixing the two rotation axes at the distance from one another.

2. Method according to Claim 1, **characterized in that** step b) is carried out before step a).

3. Method according to either of the preceding claims, **characterized in that** step g) is followed by step h), in which a further measurement of the belt tension is carried out in line with steps c) and d).

4. Method according to one of the preceding claims, **characterized in that** the amount by which the distance between the rotation axes is increased in step e2) or reduced in step f2) is reduced each time the method is run through, until step g) is reached.

5. Method according to one of the preceding claims, **characterized in that** the amount by which the distance between the rotation axes is increased in step e2) or reduced in step f2) is halved each time the method is run through, until step g) is reached.

6. Method according to one of the preceding claims, **characterized in that**, in step c), rotation is performed until a prespecified maximum torque is reached, and **in that** the rotation angle which is required in order to reach the prespecified torque is measured.

7. Method according to one of the preceding claims, **characterized in that**, in step c), the rotation angle relative to a starting rotation angle is measured, this being ascertained from a first increase in the torque during the rotation.

8. Method for adjusting a belt tension in a belt drive of an electromechanical steering gear mechanism comprising two axially parallel belt pulleys (7, 9), which can be rotated about respective rotation axes, and a belt which loops around the belt pulleys, wherein a first rotation axis is a drive axle and a second rotation axis is an output axle of the belt drive, **characterized by** the following steps:
a) positioning the first rotation axis and the second rotation axis at a distance from one another;
b) mounting a fork-like measuring element (10, 23) on a belt strand (17, 18) in such a way that the belt strand is arranged between two measuring pins (14, 15, 24) of the fork-like measuring element (10, 23) and the measuring pins (14, 15, 24) are arranged on opposite sides of the belt strand (17, 18);
c) rotating the measuring element (10, 23) about an axis (11) which is oriented parallel to a rotation axis of a belt pulley, wherein the rotation is performed by means of a drive of the measuring element (10, 23), and recording at least one pair of measurement values which represent a torque, which acts on the measuring element, and a respective rotation angle of the measuring element (10, 23),
d) determining a belt tension value, which is correlated to the belt tension, from the measurement value for the torque and/or the measurement value for the rotation angle;
p) shifting the first rotation axis and the second rotation axis in relation to one another while continuing to determine the belt tension value in line with step d), until the belt tension value is both greater than or equal to a prespecified lower limit value of the belt tension value and is less than or equal to a prespecified upper limit value of the belt tension value;
q) fixing the two rotation axes.

9. Method according to Claim 8, **characterized in that** step q) is followed by step h) in which a further measurement of the belt tension is carried out in line with steps c) and d).

10. Method according to one of preceding Claims 8-10, **characterized in that**, in step c), the prespecified rotation angle is performed relative to a reference angle which is defined with respect to the belt drive or a housing which surrounds the belt drive.

11. Method according to one of the preceding claims, **characterized in that** the rotation in step c) is performed up to a prespecified torque or up to a prespecified rotation angle initially in one rotation direction, wherein first measurement values for torque and rotation angle are detected, and then the rotation is performed in the opposite rotation direction, wherein second measurement values for torque and rotation angle in this rotation direction are recorded, and **in that** the first and the second measurement values are evaluated in order to calculate the belt tension value.

12. Method according to one of the preceding claims, **characterized in that**, before the positioning of the first rotation axis and the second rotation axis in relation to one another, a measurement of the torque which is required for rotation of the measuring fork through a prespecified rotation angle is performed with the belt in the untensioned state in order to ascertain a stiffness value of the belt.

## Revendications

1. Procédé de réglage d'une tension de courroie dans une transmission par courroie d'un mécanisme de direction électromécanique comprenant deux poulies de courroie (7, 9) aux axes parallèles pouvant tourner autour d'axes de rotation respectifs, et une courroie qui est enroulée autour des poulies de courroie, un premier axe de rotation étant un axe menant et un deuxième axe de rotation un axe mené de la transmission par courroie, **caractérisé par** les étapes suivantes :
a) positionnement du premier axe de rotation et du deuxième axe de rotation à un certain espacement l'un de l'autre ;
b) pose d'un élément de mesure (10, 23) en forme de fourche sur un brin de courroie (17, 18) de telle sorte que le brin de courroie est disposé entre deux tenons de mesure (14, 15, 24) de l'élément de mesure en forme de fourche et les tenons de mesure (14, 15, 24) sont disposés sur les côtés opposés du brin de courroie (17, 18) ;
c) rotation de l'élément de mesure (10, 23) autour d'un axe (11) qui est orienté parallèlement à un axe de rotation d'une poulie de courroie, la rotation étant effectuée au moyen d'un mécanisme d'entraînement de l'élément de mesure, et enregistrement d'au moins une paire de valeurs mesurées qui restituent un couple agissant sur l'élément de mesure et un angle de rotation correspondant de l'élément de mesure (10, 23) ;
d) détermination d'une valeur de tension de courroie, qui est corrélée avec la tension de la courroie, à partir de la valeur mesurée du couple et/ou la valeur mesurée de l'angle de rotation ;
e) comparaison de la valeur de tension de courroie avec une valeur limite basse prédéfinie de la valeur de tension de courroie ;
e1) lorsque la valeur de tension de courroie est égale ou supérieure à la valeur limite basse prédéfinie :
continuer à l'étape f) ; e2) lorsque la valeur de tension de courroie est inférieure à la valeur limite basse prédéfinie : positionnement des axes de rotation avec un espacement entre les axes de rotation augmenté d'une valeur donnée, retour à l'étape c) ;
f) comparaison de la valeur de tension de courroie avec une valeur limite haute prédéfinie de la valeur de tension de courroie ;
f1) lorsque la valeur de tension de courroie est inférieure ou égale à la valeur limite haute prédéfinie : continuer à l'étape g) ;
f2) lorsque la valeur de tension de courroie est supérieure à la valeur limite haute prédéfinie : positionnement des axes de rotation avec un espacement entre les axes de rotation diminué d'une valeur donnée, retour à l'étape c) ;
g) fixation des deux axes de rotation avec l'espacement donné l'un de l'autre.

2. Procédé selon la revendication 1, **caractérisé en ce que** l'étape b) est exécutée avant l'étape a).

3. Procédé selon l'une des revendications précédentes, **caractérisé en ce que** l'étape g) est suivie d'une étape h) dans laquelle une mesure supplémentaire de la tension de courroie est effectuée conformément aux étapes c) et d).

4. Procédé selon l'une des revendications précédentes, **caractérisé en ce que** la valeur de laquelle l'espacement entre les axes de rotation est augmenté à l'étape e2) ou diminué à l'étape f2) est réduite à chaque cycle d'exécution du procédé jusqu'à atteindre l'étape g).

5. Procédé selon l'une des revendications précédentes, **caractérisé en ce que** la valeur de laquelle l'espacement entre les axes de rotation est augmenté à l'étape e2) ou diminué à l'étape f2) est divisée par deux à chaque cycle d'exécution du procédé jusqu'à atteindre l'étape g).

6. Procédé selon l'une des revendications précédentes, **caractérisé en ce qu'**à l'étape c), la rotation est effectuée jusqu'à atteindre un couple maximum prédéfini et **en ce que** l'angle de rotation qui est nécessaire pour atteindre le couple prédéfini est mesuré.

7. Procédé selon l'une des revendications précédentes, **caractérisé en ce qu'**à l'étape c), l'angle de rotation est mesuré par rapport à un angle de rotation initial qui est déterminé à partir d'une première augmentation du couple pendant la rotation.

8. Procédé de réglage d'une tension de courroie dans une transmission par courroie d'un mécanisme de direction électromécanique comprenant deux poulies de courroie (7, 9) aux axes parallèles pouvant tourner autour d'axes de rotation respectifs, et une courroie qui est enroulée autour des poulies de courroie, un premier axe de rotation étant un axe menant et un deuxième axe de rotation un axe mené de la transmission par courroie, **caractérisé par** les étapes suivantes :
a) positionnement du premier axe de rotation et du deuxième axe de rotation à un certain espacement l'un de l'autre ;
b) pose d'un élément de mesure (10, 23) en forme de fourche sur un brin de courroie (17, 18) de telle sorte que le brin de courroie est disposé entre deux tenons de mesure (14, 15, 24) de l'élément de mesure (10, 23) en forme de fourche et les tenons de mesure (14, 15, 24) sont disposés sur les côtés opposés du brin de courroie (17, 18) ;
c) rotation de l'élément de mesure (10, 23) autour d'un axe (11) qui est orienté parallèlement à un axe de rotation d'une poulie de courroie, la rotation étant effectuée au moyen d'un mécanisme d'entraînement de l'élément de mesure (10, 23), et enregistrement d'au moins une paire de valeurs mesurées qui restituent un couple agissant sur l'élément de mesure et un angle de rotation correspondant de l'élément de mesure (10, 23) ;
d) détermination d'une valeur de tension de courroie, qui est corrélée avec la tension de la courroie, à partir de la valeur mesurée du couple et/ou la valeur mesurée de l'angle de rotation ;
p) décalage du premier axe de rotation et du deuxième axe de rotation l'un par rapport à l'autre avec détermination continue de la valeur de tension de courroie selon l'étape d) jusqu'à ce que la valeur de tension de courroie soit à la fois égale ou supérieure à une valeur limite basse pouvant être prédéfinie de la valeur de tension de courroie et inférieure ou égale à une valeur limite haute pouvant être prédéfinie de la valeur de tension de courroie ;
q) fixation des deux axes de rotation.

9. Procédé selon la revendication 8, **caractérisé en ce que** l'étape q) est suivie d'une étape h) dans laquelle une mesure supplémentaire de la tension de courroie est effectuée conformément aux étapes c) et d) .

10. Procédé selon l'une des revendications précédentes 8 à 10, **caractérisé en ce qu'**à l'étape c), l'angle de rotation est effectué par rapport à un angle de référence qui est défini par rapport à la transmission par courroie ou un carter qui entoure la transmission par courroie.

11. Procédé selon l'une des revendications précédentes, **caractérisé en ce que** la rotation à l'étape c) jusqu'à un couple prédéfini ou jusqu'à un angle de rotation prédéfini s'effectue tout d'abord dans un sens de rotation, des premières valeurs mesurées du couple et de l'angle de rotation étant acquises, et la rotation s'effectue ensuite dans le sens de rotation inverse, des deuxièmes valeurs mesurées du couple et de l'angle de rotation étant acquises dans ce sens de rotation, et **en ce que** les premières et les deuxièmes valeurs mesurées sont interprétées en vue de calculer la valeur de tension de courroie.

12. Procédé selon l'une des revendications précédentes, **caractérisé en ce qu'**une mesure du couple qui est nécessaire pour une rotation de la fourche de mesure selon un angle de rotation prédéfini est effectuée avec la courroie non tendue, avant le positionnement du premier axe de rotation et du deuxième axe de rotation l'un par rapport à l'autre, afin de déterminer une valeur de rigidité de la courroie.
